# EUROPEAN PATENT SPECIFICATION

(11) **EP 1 442 237 B1**
(45) Date of publication and mention of the grant of the patent: **25.01.2006**
(21) Application number: 02789043.3
(22) Date of filing: 23.10.2002
(51) Int. Cl.: F16H 57/04

(54) **DEVICE FOR LUBRICATING GEARWHEELS**
VORRICHTUNG ZUR SCHMIERUNG VON ZAHNRÄDERN
DISPOSITIF POUR LUBRIFIER DES ROUES D'ENGRENAGES

(30) Priority: 31.10.2001 SE 0103633
(43) Date of publication of application: 04.08.2004
(73) Proprietor: VOLVO LASTVAGNAR AB, 405 08 Göteborg (SE)
(72) Inventor: NYLUND, Clas, S-416 73 Göteborg (SE); CSATA, Attila, S-443 50 Lerum (SE)
(74) Representative: Fröhling, Werner Otto
(86) International application number: PCT/SE2002/001927
(87) International publication number: WO 2003/038312

(56) References cited:
- DE-A1- 19 857 221
- SE-B- 464 830
- US-A- 3 789 956
- US-A- 4 480 493
- US-A- 4 741 220

## Description

### TECHNICAL FIELD

The present invention relates to a device for lubricating gearwheels according to the preamble of patent claim 1 below. In particular, the invention relates to such a device for lubricating gearwheels, which gearwheels are arranged in various types of heavily loaded gears, for example a planetary gear.

### TECHNICAL BACKGROUND

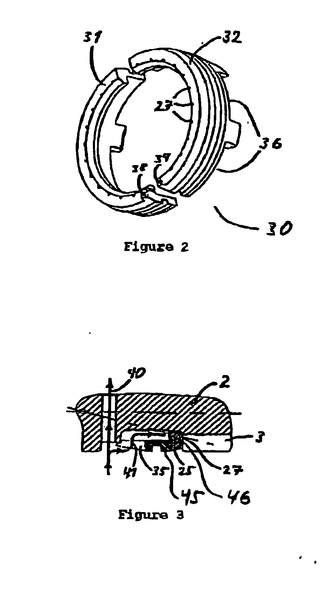

From the generic SE 464830, it is previously known, in a heavily loaded toothed gearing, such as a planetary gear in a vehicle gearbox, to distribute and guide lubricant by means of a specially designed ring in such a way that all the teeth on a gearwheel in the gearing are lubricated at the same time. This is brought about by means of a circular-are-shaped groove in the ring bearing against the end surface of the gearwheel, the groove being open toward the gearwheel. The groove extends around the entire periphery of the ring. Lubricant is fed to the groove from a pressurized duct. The groove is made concentrically with the gearwheel and has an outer delimiting surface which lies radially slightly outside the bottom surface in the tooth gaps between the teeth on the gearwheel. In this way, narrow apertures, where the groove is open in toward the tooth gaps (see in particular Figure 2 in SE 464830), are formed in the tooth gaps between the teeth. According to this known art, the gearwheel is mounted on its shaft by a spline joint. The gearwheel and the ring with the groove are pressed firmly against a shoulder on the shaft by means of a screw screwed into the end of the shaft. The ring with the groove has to be mounted before the gearwheel. It is therefore not possible to use known art for gearwheels which are integrated in the shaft.

Another problem associated with known art is ensuring that the correct quantity of lubricant comes out through the apertures. The quantity of lubricant is controlled by inter alia the size of the aperture opening. In order to obtain optimum opening size, stringent tolerance requirements are necessary for the gash of the gearwheel, that is to say the valley between the teeth. This leads to increased manufacturing costs.

A further problem associated with known art as above is that it is not possible to optimize the direction of the lubricant jet so that the lubricant is applied accurately and used effectively.

For the arrangement in SE 464830 there is moreover a risk that the ring can be mounted the wrong way round without the fitter noticing this, with malfunctioning as a consequence. DE19857221 shows a vehicle gearbox where an annular structure 8 serves for sufficient lubricant being directed to an element being lubricated and where said annular structure can be assembled to a shaft 1 such that mounting errors are avoided. From figure 2 in DE19857221 it is apparent that the annular structure can be opened for mounting it on the shaft by means of elasticity.

Against the background of the above, the object of the invention is therefore to make it possible to lubricate a gearwheel integrated in a shaft and also to control the quantity of lubricant and the direction of the lubricant jet in an optimum manner so that effective lubrication and cooling of a heavily loaded toothed gearing is obtained. The object of the invention is also to eliminate mounting errors.

### DISCLOSURE OF THE INVENTION

According to the invention, the object is achieved, with regard to the device according to the invention, in the way described in patent claim 1. The other patent claims describe preferred embodiments and developments of the device according to the invention.

The lubricating device according to the invention according to claim 1 comprises a gearwheel in a toothed gearing, comprising a shaft on which the gearwheel is arranged, at least one first duct for supplying lubricant under pressure, whereby said duct has a mouth in an area located in proximity to said gearwheel to be lubricated, an essentially annular structure which is arranged around said shaft and bears against the end surface of the gearwheel for guiding and distributing lubricant from said first duct out to the gearwheel, whereby said annular structure has at least one discontinuity along its periphery and is mounted on the shaft next to said gearwheel. The device is characterized in that said annular structure with said at least one discontinuity is designed such that said annular structure can be opened up sufficiently to be mounted or dismounted on said shaft, and a retaining nut is arranged coaxially on the outside of said annular structure and adapted to press said annular structure against the shaft.

One advantage of the device according to the invention is that the structure is provided with at least one discontinuity so it becomes possible to open up the structure sufficiently that it can be mounted next to or passed over a gearwheel integrated on a shaft. It should be mentioned that the structure in this first embodiment can be provided with some form of hinge. The alternative is for the ring to be elastic enough that it can be opened up sufficiently.

According to an advantageous second embodiment of the device according to the invention, the structure is constructed from at least two circular-arc-shaped elements. This means that there are at least two discontinuities along the periphery of the structure. In this case, the requirement for a hinge or elasticity of the structure does not have to be taken into consideration.

According to an advantageous third embodiment of the device according to the invention, a number of third ducts are arranged through the annular structure for lubricating the gearwheel. The third ducts are angled in relation to the radial plane and/or the tangential plane for the purpose of optimizing the direction of the lubricant jet so that effective lubrication and cooling of a toothed gearing are obtained. By virtue of the fact that the mouth of the third ducts is drilled or formed directly in the structure alone, the direction and also the size of the duct and thus the quantity of lubricant fed can be controlled and guaranteed for each third duct in a comparatively simple and inexpensive way.

According to an advantageous fourth embodiment of the device according to the invention, one or more guide projection(s) is or are arranged on the structure so that the mouth of each third duct always comes to lie between two teeth arranged next to one another on the gearwheel. The guide projections ensure correct mounting of the annular structure in relation to the gearwheel.

Further advantageous embodiments of the invention emerge from the dependent patent claims which follow.

### DESCRIPTION OF FIGURES

The present invention will be described in greater detail below with reference to accompanying drawings which, for the purpose of exemplification, show further preferred embodiments of the invention.
- Figure 1: shows a side view of an advantageous embodiment of the invention applied to the sun gear in a planetary gear.
- Figure 2: shows a three-dimensional view of an advantageous embodiment of the annular structure which forms part of the invention.
- Figure 3: shows an enlargement of a part area of Figure 1 with the oil distribution shown and also an example of an angled third duct.

### DESCRIPTION OF PREFERRED EMBODIMENTS

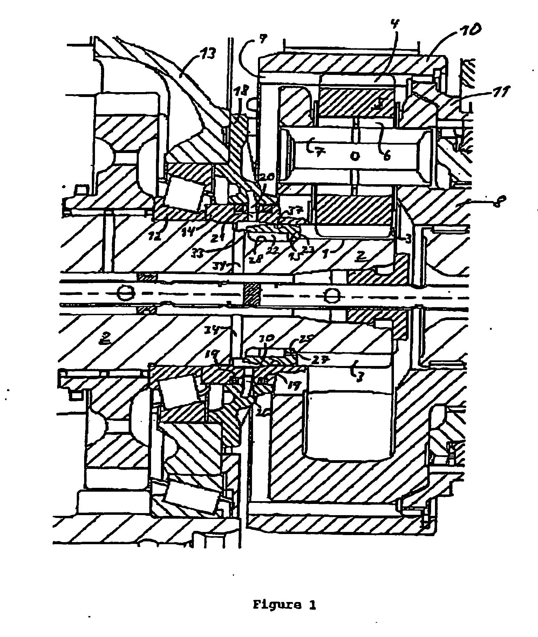

Figure 1 shows a section through part of a gearbox. Other parts of the gearbox are not shown as they do not constitute part of the invention. The part shown in Figure 1 is a planetary gear with a sun gear 1, which sun gear is a gearwheel integrated in the shaft 2. The teeth 3 of the sun gear 1 are in engagement with the teeth 4 on a number of planet wheels 5 which, by means of bearings 6, are mounted on pivots 7 which are in turn supported by a planet-wheel carrier 8. Moreover, the teeth 4 of the planet wheels 5 are in engagement with the teeth 9 on a ring gear 10 which is in turn supported by a ring-gear holder 11.

The shaft 2 is mounted in a bearing 12 which is arranged in a fixed part of the gearbox casing. Bearing against the inner ring of the bearing 12 is a retaining nut 14 in the form of a threaded ring which is screwed firmly into corresponding threads arranged on the shaft 2. The inside diameter of the retaining nut 14 is slightly greater than the outside diameter of the sun gear 1, which makes it possible to pass the retaining nut over the sun gear for mounting and fixing on the shaft 2. The retaining nut 14 clamps the inner ring of the bearing 12 against a shoulder on the shaft 2. The retaining nut 14 also firmly retains an annular structure 30 for distributing lubricant. The structure 30 is arranged coaxially with and inside the retaining nut 14, which means that the inside diameter of the annular structure 30 is smaller than the outside diameter of the sun gear 1. Furthermore, the annular structure 30 has to be mounted before the retaining nut 14 is mounted.

In the embodiment of the invention shown, the sun gear 1 is arranged at one end of the shaft 2. The annular structure 30 is mounted between the inner ring 12 of the bearing and one axial end surface 15 of the sun gear, against which end surface the structure 30 bears. The second axial end surface 33 of the structure bears against a shoulder on the shaft 2. In an advantageous embodiment of the invention, the annular structure 30 has two discontinuities along the periphery of the structure, that is to say the structure consists of two circular-arc-shaped elements 31 and 32. By virtue of the structure 30 being divided, it can be mounted and bear against a shaft surface 28 which has a diameter which is smaller than the outside diameter of the sun gear 1, and in this way one axial end surface 23 of the structure can bear against one axial end surface 15 of the sun gear. The other axial end surface 33 of the annular structure bears against a shoulder on the shaft.

The retaining nut 14 rotates together with the shaft 2 and the sun gear 1 and also the inner ring of the bearing 12. Located radially outside the retaining nut 14 is a cover 18 which is connected firmly to the fixed part 13. Located between the fixed cover 18 and the rotating retaining nut 14 are two sealing rings 19 for effecting sealing between the cover 18 and the retaining nut 14. A groove 20 extending in the peripheral direction is formed between the two sealing rings 19. In the embodiment shown, the groove 20 is formed partly in the retaining nut 14 and partly in the cover 18, but it is of course conceivable to arrange the groove 20 in only one of these two parts. From the peripheral groove 20, a number of fundamentally radial first ducts 21 extend into and through the retaining nut 14. Connected to these first ducts 21 are on the one hand radial ducts 34 arranged in the shaft 2, for onward distribution of lubricant to other parts of the gearbox, and on the other hand ducts 22, 25 arranged in the structure 30.

The lateral surface 28 of the shaft, together with a part of the inner surface of the annular structure 30, forms a second duct 22 or cavity running all around in the peripheral direction of the structure. The second duct 22 is connected to the first ducts 21 through openings 35 which consist of cutouts 36 arranged along the second axial end surface 33 of the structure 30 (see in particular Figures 2 and 3).

From the second duct 22, the lubricant is guided out through a number of parallel third ducts 25 arranged in the axial direction, which third ducts open on the first axial end surface 23 of the structure. The third ducts 25 are arranged through the annual structure and are connected to the second duct 22 running all around. The mouths 27 are positioned in such a way that the lubricant preferably comes out between two teeth 3 on the sun gear 1.

Arranged between the retaining nut 14 and the structure 30 is a seal 37 running all around, which ensures that sealing is effected between the retaining nut 14 and the annular structure 30. The seal 37 between the retaining nut 14 and the structure 30 has resilient properties. The inside diameter of the retaining nut is slightly greater than the outside diameter of the structure so that the retaining nut will pass exactly over the structure. The size of the seal 37 and the groove for the seal is adapted so that the seal is compressed slightly when the retaining nut is mounted. The pressure from the seal 37 ensures that the two circular-arc-shaped parts 31, 32 of the structure are pressed against one another and against the shaft 2, thus ensuring tight mounting.

In order to eliminate the risk of incorrect mounting of the structure 30, guide projections 38 and 39 are arranged on the first axial end surface 23 of the structure. In the preferred embodiment of the invention, a guide projection is arranged on each circular-arc-shaped part 31, 32. When the two parts of the structure 30 are assembled on the shaft 2, the two guide projections 38, 39 fit in exactly between two teeth 3 on the sun gear 1. The guide projections and the mouths 27 of the third ducts 25 are arranged at a relative spacing from one another which corresponds to the spacing between two teeth. According to the embodiment shown, a mouth will therefore be present between all teeth. It is possible to arrange guide projections so that these are inserted into a recess arranged somewhere on the lateral surface of the shaft 2 instead and in this way ensure that lubrication is possible between all the teeth on a gearwheel.

The annular structure 30 comprises a first portion 45, which at least forms part of a ring, and a second portion 46, which is connected to the first portion and extends along it in the peripheral direction and projects inward in the radial direction from the first portion 23. In a cross section of the structure (see Figure 3), it essentially has the shape of an L, where the first portion 45 forms the longer leg of the L, and the second portion 46 forms the shorter leg of the L. The third ducts 25 extend through the second portion 46.

The cover 18 is, in at least one place, provided with a connection means (not shown) for lubricant under pressure. The path of the lubricant through the ducts is illustrated best in Figure 3 by the flow arrows 40 and 41. This lubricant is supplied under pressure from a pressure source (not shown). The connection means communicates with the peripheral groove 20, and, when lubricant under pressure is supplied through the connection means, it is distributed in the peripheral groove 20 and flows from this through the radial first ducts 21, on through the openings 35 and the second duct 22, and lastly to the third ducts 25 (see flow arrow 41). In the second duct 22, the lubricant is distributed along the entire periphery and is ejected under pressure through the narrow third ducts 25. This means that lubricant under pressure is injected into the tooth gaps between all the teeth 3 on the sun gear 1. By virtue of the fact that the second duct 22 extends around the entire periphery of the annular structure 30, lubricant will be ejected in a parallel manner through all the mouths 27 at the same time, which means that all the teeth 3 on the sun gear 1 will be lubricated continuously. The injection direction of the third ducts 25 can be optimized by the hole through the structure 30 which forms the ducts 25 being drilled at a certain angle relative to the geometrical center of the shaft. The duct can be angled in the radial plane and/or the tangential plane. The positioning, injection direction, and size of the third ducts 25 and also their number in relation to the number of teeth 3 are optimized with regard to the lubricating action and also cooling of the teeth. In this way, very effective lubrication and simultaneous cooling of all the teeth 3 on the sun gear 1 are obtained. The third ducts 25 with their mouths 27 moreover mean that all the lubricant goes to the correct place, that is to say it is used for lubricating and cooling the teeth 3, which means that there is less waste of lubricant compared with devices in which the oil is ejected through the nozzles toward the gearwheel at a certain distance from it.

The invention is of course not limited to the illustrative embodiments described above, but modifications can be made within the scope of the patent claims which follow. For example, the integrated sun gear 1 can be replaced by a gearwheel which is mounted on the shaft 2 by means of a spline joint (see, for example, the sun-gear 1 in SE 464830). It is also possible to use the device according to the invention in other types of gear than planetary gears. The gearwheel on which the invention is used does not have to be arranged at one end of a shaft but can also be arranged somewhere along a shaft. The number of axial third ducts can be selected freely so that, for example, a mouth 27 is arranged only between every other or every third tooth pair. The third ducts 25 can be replaced by a few axial ducts and a circular-arc-shaped groove, like that in SE 464830, arranged on that end surface of the structure which bears against the gearwheel.

## Claims

1. A device for lubricating a gearwheel (1) in a toothed gearing, comprising a shaft (2) on which the gearwheel (1) is arranged, at least one first duct (21) for supplying lubricant under pressure, whereby said duct has a mouth in an area located in proximity to said gearwheel (1) to be lubricated, an essentially annular structure (30) which is arranged around said shaft (2) and bears against the end surface (15) of the gearwheel (1) for guiding and distributing lubricant from said first duct out to the gearwheel, whereby said annular structure (30) has at least one discontinuity along its periphery and is mounted on the shaft (2) next to said gearwheel (1), **characterized in that** said annular structure (30) with said at least one discontinuity is designed such that said annular structure (30) can be opened up sufficiently to be mounted or dismounted on said shaft (2), and a retaining nut (14) is arranged coaxially on the outside of said annular structure (30) and adapted to press said annular structure against the shaft (2).

2. The device as claimed in claim 1, **characterized in that** the annular structure (30) is constructed from at least two circular-arc-shaped elements (31, 32).

3. The device as claimed in claim 2, **characterized in that** the circular-are-shaped elements (31, 32) consist of mutually separable parts.

4. The device as claimed in any one of the preceding claims, **characterized in that** a part of the inner surface of the annular structure (30), together with the surface (28) of the shaft, forms a second duct (22) running all around in the peripheral direction of the gearwheel, which second duct is connected to the first duct (21), and **in that** at least one third duct (25) is arranged through the annular structure from the second duct to the gearwheel.

5. The device as claimed in claim 4, **characterized in that** the annular structure (30) comprises a number of third ducts (25), the mouth (27) of each third duct opens between two teeth (3) on the gearwheel, and the purpose of the third ducts is to distribute lubricant to all the teeth at the same time.

6. The device as claimed in claim 4 or 5, **characterized in that** each third duct (25) is essentially parallel to the center line of the shaft.

7. The device as claimed in claim 4 or 5,
**characterized in that** each third duct (25) is angled in relation to the radial plane and/or the tangential plane.

8. The device as claimed in any one of claims 4 to 7, **characterized in that** one or more guide projection(s) (38, 39) is or are arranged on the annular structure (30) so that the mouth (27) of each third duct always comes to lie between two teeth (3) arranged next to one another on the gearwheel.

9. The device as claimed in any one of the preceding claims, **characterized in that** the annular structure comprises a first portion (45), which at least forms part of a ring, and a second portion (46), which is connected to the first portion and extends along it in the peripheral direction and projects inward in the radial direction from the first portion.

10. The device as claimed in claim 9, **characterized in that**, in a cross section in the axial direction through the center line of the annular structure, the annular structure essentially has the shape of an L, where the first portion (45) forms the longer leg of the L, and the second portion (46) forms the shorter leg of the L.

11. The device as claimed in any one of claims 4 to 8 and also 9 or 10, **characterized in that** the third ducts (25) extend through the second portion (46).

12. The device as claimed in any one of the preceding claims, **characterized in that** the gearwheel (1) is integrated in the shaft (2).

## Patentansprüche

1. Vorrichtung zur Schmierung eines Zahnrads (1) in einem Zahnradgetriebe, mit einer Welle (2), auf der das Zahnrad angeordnet ist, wenigstens einer ersten Leitung (21) für eine Zufuhr von Schmiermittel unter Druck, wobei die Leitung eine Mündung in einem Bereich aufweist, der in der Nähe des zu schmierenden Zahnrades (1) angeordnet ist, einem im Wesentlichen ringförmigen Aufbau (30), der um die Welle (2) angeordnet ist und an der Stimfläche (15) des Zahnrades (1) für eine Führung und Verteilung von Schmiermittel aus der ersten Leitung heraus zu dem Zahnrad anliegt, wobei der ringförmige Aufbau (30) wenigstens eine Diskontinuität entlang seines Umfangs aufweist und auf der Welle (2) neben dem Zahnrad (1) angebracht ist, **dadurch gekennzeichnet, dass** der ringförmige Aufbau (30) mit der wenigstens einen Diskontinuität so ausgelegt ist, dass der ringförmige Aufbau (30) ausreichend geöffnet werden kann, um auf der Welle (2) montiert oder von dieser demontiert werden zu können, und eine Sicherungsmutter (14) an der Außenseite des ringförmigen Aufbaus (30) angeordnet ist und den ringförmigen Aufbau gegen die Welle (2) drücken kann.

2. Vorrichtung nach Anspruch 1, **dadurch gekennzeichnet**, das der ringförmige Aufbau (30) aus wenigstens zwei kreisbogenförmigen Elementen (31, 32) konstruiert ist.

3. Vorrichtung nach Anspruch 2, **dadurch gekennzeichnet, dass** die kreisbogenförmigen Elemente (31, 32) aus voneinander trennbaren Teilen bestehen.

4. Vorrichtung nach einem der vorhergehenden Ansprüche, **dadurch gekennzeichnet, dass** ein Teil der Innenfläche des ringförmigen Aufbaus (30) zusammen mit der Oberfläche (28) der Welle eine zweite Leitung (22) bildet, die in Umfangsrichtung des Zahnrades ganz herum läuft, wobei die zweite Leitung mit der ersten Leitung (21) verbunden ist, und dass wenigstens eine dritte Leitung (25) durch den ringförmigen Aufbau von der zweiten Leitung zu dem Zahnrad angeordnet ist.

5. Vorrichtung nach Anspruch 4, **dadurch gekennzeichnet, dass** der ringförmige Aufbau (30) eine Anzahl von dritten Leitungen (25) umfasst, die Mündung (27) jeder dritten Leitung zwischen zwei Zähnen (3) an dem Zahnrad mündet, und der Zweck der dritten Leitungen darin besteht, Schmiermittel gleichzeitig auf alle Zähne zu verteilen.

6. Vorrichtung nach Anspruch 4 oder 5, **dadurch gekennzeichnet, dass** jede dritte Leitung (25) im Wesentlichen parallel zur Mittellinie der Welle verläuft.

7. Vorrichtung nach Anspruch 4 oder 5, **dadurch gekennzeichnet, dass** jede dritte Leitung (25) bezüglich der Radialebene und/oder der Tangentialebene im Winkel angeordnet ist.

8. Vorrichtung nach einem der Ansprüche 4 bis 7, **dadurch gekennzeichnet, dass** ein Führungsvorsprung oder mehrere Führungsvorsprünge (38, 39) so auf dem ringförmigen Aufbau (30) angeordnet ist bzw. sind, dass die Mündung (27) jeder dritten Leitung immer zwischen zwei Zähnen (3) liegt, die nebeneinander an dem Zahnrad angeordnet sind.

9. Vorrichtung nach einem der vorhergehenden Ansprüche, **dadurch gekennzeichnet, dass** der ringförmige Aufbau einen ersten Abschnitt (45), der wenigstens einen Teil eines Ringes bildet, und einen zweiten Abschnitt (46) umfasst, der mit dem ersten Abschnitt verbunden ist und sich entlang dessen in Umfangsrichtung erstreckt und in Radialrichtung von dem ersten Abschnitt nach innen vorsteht.

10. Vorrichtung nach Anspruch 9, **dadurch gekennzeichnet, dass** in einem Querschnitt in der Axialrichtung durch die Mittellinie des ringförmigen Aufbaus der ringförmige Aufbau im Wesentlichen die Form eines L hat, wobei der erste Abschnitt (45) den längeren Schenkel des L bildet und der zweite Abschnitt (46) den kürzeren Schenkel des L bildet.

11. Vorrichtung nach einem der Ansprüche 4 bis 8 und auch 9 oder 10, **dadurch gekennzeichnet, dass** die dritten Leitungen (25) sich durch den zweiten Abschnitt (46) erstrecken.

12. Vorrichtung nach einem der vorhergehenden Ansprüche, **dadurch gekennzeichnet, dass** das Zahnrad (1) in die Welle (2) integriert ist.

## Revendications

1. Dispositif pour lubrifier un pignon (1) d'une transmission dentée, comportant un arbre (2) sur lequel le pignon (1) est agencé, au moins un premier conduit (21) pour alimenter du lubrifiant sous pression, ledit conduit ayant une embouchure dans une zone située à proximité dudit pignon (1) à lubrifier, une structure essentiellement annulaire (30) qui est agencée autour dudit arbre (2) et est en appui contre la surface d'extrémité (15) du pignon (1) pour guider et répartir le lubrifiant provenant dudit conduit vers le pignon, de sorte que ladite structure annulaire (30) a au moins une discontinuité le long de sa périphérie et est montrée sur l'arbre (2) à proximité dudit pignon (1), **caractérisé en ce que** ladite structure annulaire (30) ayant ladite au moins une discontinuité est conçue de telle sorte que ladite structure annulaire (30) peut être suffisamment ouverte pour être montée sur ledit arbre (2) ou démontée de celui-ci, et un écrou de retenue (14) est agencé coaxialement sur l'extérieur de ladite structure annulaire (30) et est adapté pour pousser ladite structure annulaire contre l'arbre (2).

2. Dispositif selon la revendication 1, **caractérisé en ce que** la structure annulaire (30) est construite à partir d'au moins deux éléments en forme d'arc de cercle (31, 32).

3. Dispositif selon la revendication 2, **caractérisé en ce que** les éléments en forme d'arc de cercle (31, 32) sont constitués de pièces pouvant être mutuellement séparées.

4. Dispositif selon l'une quelconque des revendications précédentes, **caractérisé en ce qu'**une partie de la surface intérieure de la structure annulaire (30), associée à la surface (28) de l'arbre, forme un deuxième conduit (22) s'étendant tout autour du pignon, dans la direction périphérique, lequel deuxième conduit est relié au premier conduit (21), et **en ce qu'**au moins un troisième conduit (25) est agencé à travers la structure annulaire à partir du deuxième conduit jusqu'au pignon.

5. Dispositif selon la revendication 4, **caractérisé en ce que** la structure annulaire (30) comporte plusieurs troisièmes conduits (25), l'embouchure (27) de chaque troisième conduit s'ouvrant entre deux dents (3) du pignon, et le but des troisièmes conduits est de répartir le lubrifiant sur toutes les dents en même temps.

6. Dispositif selon la revendication 4 ou 5, **caractérisé en ce que** chaque troisième conduit (25) est essentiellement parallèle à l'axe central de l'arbre.

7. Dispositif selon la revendication 4 ou 5, **caractérisé en ce que** chaque troisième conduit (25) est incliné par rapport au plan radial et/ou au plan tangentiel.

8. Dispositif selon l'une quelconque des revendications 4 à 7, **caractérisé en ce qu'**une ou plusieurs saillies de guidage (38, 39) est ou sont agencées sur la structure annulaire (30) de sorte que l'embouchure (27) de chaque troisième conduit vient toujours se situer entre deux dents (3) agencées à la suite l'une de l'autre sur le pignon.

9. Dispositif selon l'une quelconque des revendications précédentes, **caractérisé en ce que** la structure annulaire comporte une première partie (45), qui forme au moins une partie d'un anneau, et une seconde partie (46), qui est reliée à la première partie et s'étend le long de celle-ci dans la direction périphérique et fait saillie vers l'intérieur dans la direction radiale à partir de la première partie.

10. Dispositif selon la revendication 9, **caractérisé en ce que**, en coupe dans la direction axiale passant par l'axe central de la structure annulaire, la structure annulaire a essentiellement la forme d'un L, où la première partie (45) forme la jambe plus longue du L, et la seconde partie (46) forme la jambe plus courte du L.

11. Dispositif selon l'une quelconque des revendications 4 à 8 et aussi 9 ou 10, **caractérisé en ce que** les troisièmes conduits (25) s'étendent à travers la seconde partie (46).

12. Dispositif selon l'une quelconque des revendications précédentes, **caractérisé en ce que** le pignon (1) est intégré dans l'arbre (2).
